# EUROPEAN PATENT APPLICATION

(11) **EP 4 105 742 A1**
(43) Date of publication of application: **21.12.2022**
(21) Application number: 21179732.9
(22) Date of filing: 16.06.2021
(51) Int. Cl.: G05B 19/042, A47J 36/32

(54) **CONTROLLING NOTIFICATION DELIVERY AND CONTROL ACCESS**

(71) Applicant: Koninklijke Philips N.V., 5656 AG Eindhoven (NL)
(72) Inventor: WANG, Lu, 5656 AE Eindhoven (NL); ZHANG, Ming, 5656 AE Eindhoven (NL); VAN DEN ELZEN, Stefano Johannes, 5656 AE Eindhoven (NL); DE GROOT, Koen Theo Johan, 5656 AE Eindhoven (NL); KOOIJMAN, Gerben, 5656 AE Eindhoven (NL)
(74) Representative: de Vries, Janna

(57) **Abstract**

According to an aspect, there is provided a computer-implemented method for controlling an apparatus (200) wirelessly connected to one or more external devices, the method comprising: acquiring data associated with a current location of each of one or more users and data associated with an activity being performed by each of the one or more users; determining at least one of a delivery scheme for a notification and an access scheme for providing control access of the apparatus, based on the data associated with the current location of each of the one or more users, the data associated with the activity being performed by each of the one or more users, and a context of the notification.

## Description

### FIELD OF THE INVENTION

The present disclosure relates to an apparatus wirelessly connected to one or more external devices, and a method for controlling thereof.

### BACKGROUND OF THE INVENTION

Connected cooking appliances, e.g. connected Airfryers, are becoming increasingly common in as part of household kitchens. Currently available connected cooking appliances offer mobile applications (on a Smartphone or a tablet) in order to allow users to search for recipes and perform remote appliance control.

### SUMMARY OF THE INVENTION

By introducing connectivity into cooking appliances and systems, various user experience problems have surfaced. There are a number of shortcomings associated with currently available connected cooking appliance systems, some of which relating to access to control and cooking status related notifications. For example, mobile applications that are offered together with cooking appliances can provide cooking related feedback and/or instructions, but they are provided regardless of where the user is located or what kind of activity they are performing. For example, users may find it strange or awkward to have to monitor the cooking status of a cooking appliance through their smartphones when they are next to the cooking appliance. Another shortcoming relating to currently available connected cooking systems is that notifications and exposure of controls do not take into account the context and/or the location of the user(s).

It is recognised in the present disclosure that once users initiate remote cooking, the way notifications are provided as well as access to controls become more important in order to achieve a good result. It would be advantageous to provide a technique that allows users to perform control of the cooking appliance readily and instantly, as well as to provide users with the feeling of having quick and easy access to controls even when they may not be paying attention during the cooking process or have to walk away from the cooking appliance for periods of time.

According to a first specific aspect, there is provided a computer-implemented method for controlling an apparatus, the apparatus being wirelessly connected to one or more external devices. The method comprises: acquiring data associated with a current location of each of one or more users and data associated with an activity being performed by each of the one or more users; determining at least one of a delivery scheme for a notification and an access scheme for providing control access of the apparatus to at least one of the one or more users, based on the data associated with the current location of each of the one or more users, the data associated with the activity being performed by each of the one or more users, and a context of the notification, wherein the context of the notification is associated with at least one of: a current process being performed by the apparatus, a current status of the apparatus, and a required action by at least one of the one or more users at the apparatus, wherein the delivery scheme indicates at least one of: one or more destinations at which the notification is provided, and one or more salience parameters for delivering the notification, and wherein the access scheme indicates one or more destinations at which control for the apparatus is enabled.

In some embodiments, the apparatus may be a cooking appliance, and a current process being performed by the apparatus may be a cooking process or a step in a cooking process.

In some embodiments, determining at least one of the delivery scheme for the notification and the access scheme for providing control access of the apparatus to the at least one user may be based on a set of predefined rules.

In some embodiments, the delivery scheme may further indicate a sequence in which the notification is provided at the plurality of destinations for the notification.

In some embodiments, the one or more salience parameters may comprise at least one of: a type of notification, a volume level associated with an audio notification, a font size associated with a textual notification, a vibration level associated with a haptic notification, wherein the type of notification indicates whether the notification is to be provided in at least one of the following manner: audio, visual, textual, and haptic.

In some embodiments, determining at least one of the delivery scheme for the notification and the access scheme for providing control access of the apparatus to the at least one user may be based on whether at least one of the one or more users is interacting with the apparatus. In these embodiments, whether at least one of the one or more users is interacting with the apparatus may be indicated by the data associated with the activity being performed by the one or more users.

In some embodiments where the notification is associated with a required action from at least one of the one or more users, the method may further comprise, subsequent to providing the notification according to the determined delivery scheme determining whether the required action has been performed within an associated time period. In these embodiments, if it is determined that the required action has not been performed within the associated time period, the method may further comprise performing at least one of the following steps: changing a current operation mode of the apparatus, and determining at least one of a delivery scheme for a new notification and a new access scheme for providing control access of the apparatus to the at least one user. In these embodiments, a context of the new notification may be associated with at least one of: a new current process being performed by the apparatus, a new current status of the apparatus, and a new required action by at least one of the one or more users at the apparatus.

In some embodiments where the notification is associated with a required action from at least one of the one or more users, the delivery scheme may further indicate that an adjustment to the at least one of the one or more destinations at which the notification is provided so as to reduce a number of steps required to achieve the required action. The adjustment may comprise at least one of: providing a shortcut associated with the required action at a user interface of a respective destination, and promoting a control element associated with the required action at a user interface of a respective destination.

In some embodiments, determining at least one of the delivery scheme for the notification and the access scheme for providing control access of the apparatus to the at least one user may be based on respective proximities of more than one user with the apparatus, and the delivery scheme may indicate respective sets of salience parameters for delivering the notification at more than one destinations.

In some embodiments, the data associated with the current location of the one or more users may comprise at least one of: data from a satellite-based radionavigation system, signals from one or more accelerometers at the one or more external devices, signals from one or more passive infrared sensors at the apparatus and/or the one or external devices, signals from one or more audio sensors at the apparatus and/or the one or more external devices, signals from one or more ultrasound sensors at the apparatus and/or the one or more external devices, radio frequency signals, Bluetooth signals, signals associated with a wireless access point, and signals from one or more computer vision based location sensors.

In some embodiments, the data associated with an activity being performed by the one or more users may comprise at least one of: signals from one or more image sensors, signals from one or more motion sensors, signals from an eye tracking operation based on image signals associated with the one or more users, signals from a facial recognition operation based on images signals associated with the one or more users, signals from one or more audio sensors at the apparatus and/or the one or more external devices.

In some embodiments where the method comprises determining the delivery scheme for the notification, the method may further comprise providing the notification according to the determined delivery scheme.

According to a second aspect, there is provided a computer program comprising a computer readable medium, the computer readable medium having computer readable code embodied therein, the computer readable code being configured such that, on execution by a suitable computer or processor, the computer or processor is caused to perform the method as described herein.

According to a third aspect, there is provided an apparatus comprising: a communication unit configured to wirelessly connect to one or more external devices; an acquiring unit configured to acquire data associated with a current location of each of one or more users and data associated with an activity being performed by each of the one or more users; a determining unit configured to determine at least one of a delivery scheme for a notification and an access scheme for providing control access of the apparatus to at least one of the one or more users, based on the data associated with the current location of each of the one or more users, the data associated with the activity being performed by each of the one or more users, and a context of the notification, wherein the context of the notification is associated with at least one of: a current process being performed by the apparatus, a current status of the apparatus, and a required action by at least one of the one or more users at the apparatus, wherein the delivery scheme indicates at least one of: one or more destinations at which the notification is provided, and one or more salience parameters for delivering the notification, and wherein the access scheme indicates one or more destinations at which control for the apparatus is enabled.

According to the proposed method and apparatus of the present disclosure, apparatuses (such as cooking appliances) can operate with an adaptive behaviour which improves the usability and user-friendliness of the apparatuses as well as the mobile applications that are used to control or monitor the apparatuses. Moreover, according to some embodiments of the present disclosure, the adaptive behaviour would reduce the number of steps required for users to instruct certain operations or achieve certain desired effects, and therefore offer improvements in terms of reducing the amount of computer resources required.

These and other aspects will be apparent from and elucidated with reference to the embodiment(s) described hereinafter.

### BRIEF DESCRIPTION OF THE DRAWINGS

Exemplary embodiments will now be described, by way of example only, with reference to the following drawings, in which:
Fig. 1 illustrates a computer-implemented method for controlling an apparatus, according to an embodiment; and
Fig. 2 is a block diagram of an apparatus according to an embodiment.

### DETAILED DESCRIPTION OF EMBODIMENTS

As noted above, there is provided an improved apparatus and a method of controlling the same which address the existing problems. It will be appreciated that although the description below includes examples pertaining to cooking appliances, the described method and apparatus are applicable to other (non-cooking related) types of apparatuses, such as baby monitors. It will be appreciated how determined delivery scheme(s) and/or access scheme(s) can be applied to the operation of non-cooking related apparatuses.

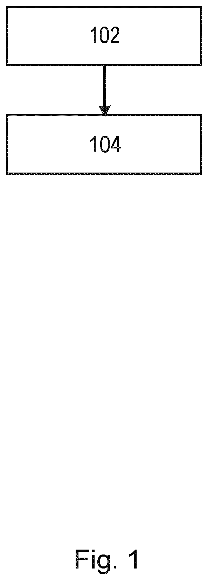

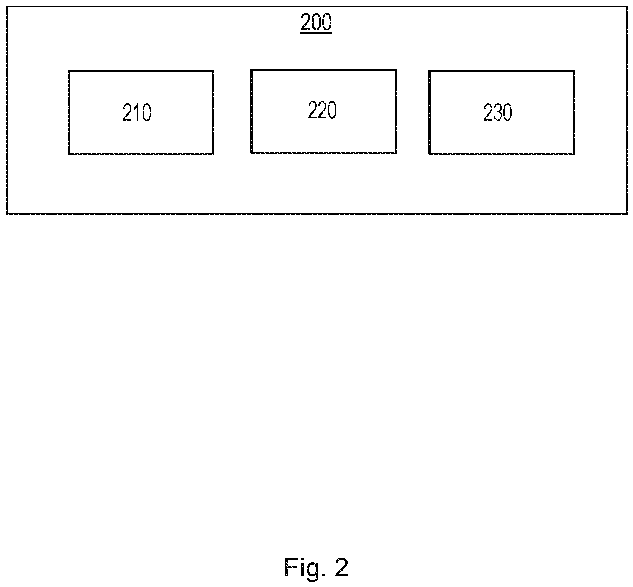

Fig. 1 illustrates a computer-implemented method for controlling an apparatus, according to an embodiment. For example, the method may be used for controlling the apparatus 200 described below with reference to Fig. 2. In some embodiments, the apparatus may be a cooking appliance, such as an Airfryer, a soup maker, a coffee machine, a steam cooker, etc.

The illustrated method can generally be performed by or under the control of a processor at the apparatus, and/or by a combination of a communication unit, an acquiring unit, and a determining unit at the apparatus, as will be explained in more detail below with reference to Fig. 2. The apparatus is wirelessly connected to one or more external devices, such as a smartphone, a tablet, a smart watch, or any other similar devices, etc. In some embodiments, the illustrated method may be implemented as an application software at the apparatus, and in some embodiments the illustrated method may be further implemented as an application software at the one or more external devices. In some embodiments, the illustrated method may be implemented on a cloud infrastructure.

With reference to Fig. 1, at block 102, data associated with a current location of each of one or more users and data associated with an activity being performed by each of the one or more users is acquired.

The data associated with the current location of the one or more users may comprise at least one of: data from a satellite-based radionavigation system, signals from one or more accelerometers at the one or more external devices, signals from one or more passive infrared sensors at the apparatus and/or the one or external devices, signals from one or more audio sensors at the apparatus and/or the one or more external devices, signals from one or more ultrasound sensors at the apparatus and/or the one or more external devices, radio frequency signals, Bluetooth signals, signals associated with a wireless access point (e.g. a Wi-Fi access point, if the respective user is remote), and signals from one or more computer vision based location sensors.

The data associated with an activity being performed by the one or more users may comprise at least one of: signals from one or more image sensors, signals from one or more motion sensors, signals from an eye tracking operation based on image signals associated with the one or more users, signals from a facial recognition operation based on images signals associated with the one or more users, signals from one or more audio sensors at the apparatus and/or the one or more external devices. The data associated with an activity being performed by the one or more users may indicate whether a respective user is interacting with the apparatus.

Subsequently, at block 104, at least one of a delivery scheme for a notification and an access scheme for providing control access of the apparatus to at least one of the one or more users is determined.

The delivery scheme indicates one or more destinations at which the notification is provided (e.g. the apparatus itself and/or the one or more external devices), and/or one or more salience parameters for delivering the notification. In some embodiments, the delivery scheme may further indicate a sequence in which the notification is provided at the plurality of destinations for the notification.

The access scheme indicates one or more destinations at which control for the apparatus is enabled.

In some embodiments, the one or more salience parameters may comprise at least one of: a type of notification (which indicates whether the notification is to be provided in at least one of the following manner: audio, visual, textual, and haptic), a volume level (e.g. "high", "medium", "low") associated with an audio notification, a font size (e.g. "big", "medium", "small") associated with a textual notification, a vibration level (e.g. "high", "medium", "low") associated with a haptic notification. For example, some notifications may be provided in audio only or vibration only, and some notifications may be provided in both audio and visual formats. These can be indicated by the one or more salience parameters.

The determination at block 104 is based on the data associated with the current location of each of the one or more users, the data associated with the activity being performed by each of the one or more users, and a context of the notification. The context of the notification is associated with at least one of: a current process being performed by the apparatus, a current status of the apparatus (e.g. a temperature inside the apparatus, a temperature of a food item inside the apparatus, whether the apparatus on/off, online/offline, or in a sleep mode, etc.), and a required action by at least one of the one or more users at the apparatus. In embodiments where the apparatus is a cooking appliance, the current process being performed by the apparatus may be a cooking process or a step in a cooking process (e.g. cutting, frying, steaming, grilling, etc.). The notification may be a target temperature of a food item (e.g. "steak target temperature: 60°C"), and/or a current temperature of a food item (e.g. "current temperature: 40°C), and/or a recommended action to be performed by a user (e.g. "turn the steak over"), and/or a status of the apparatus (e.g. "offline for 10s").

For example, based on proximity (extracted from data associated with the location of a user) it would be possible to predict how soon the user can reach the apparatus. For instance, if the user is 3 metres away from the cooking appliance, the time for them to turn the steak over is about 1.5 seconds, and the time for them to reach their smartphone and pause the cooking process at the cooking appliance via a mobile application is around 3 seconds. If the user is in the garden, the time for them to interact with the cooking appliance may be around 30 seconds, and the time for them to reach their smartphone and pause the cooking process at the cooking appliance via a mobile application is around 3 seconds. Accordingly, if it is determined from location data that the user is near the cooking appliance, the delivery scheme may be determined such that the notification is only provided at the cooking appliance (and not any of the external devices) and the access scheme may be determined such that control is only enabled at the cooking appliance itself. If it is determined from location data the user is in the garden, the delivery scheme may be determined such that the notification is provided at the smartphone of the user (via the mobile application) and the access scheme may be determined such that the user is allowed to turn off the cooking appliance via the smartphone.

In some embodiments where the notification is associated with a required action from at least one of the one or more users, the delivery scheme may further indicate that an adjustment to the at least one of the one or more destinations at which the notification is provided so as to reduce a number of steps required to achieve the required action. The adjustment may comprise at least one of: providing a shortcut associated with the required action at a user interface of a respective destination, and promoting a control element associated with the required action at a user interface of a respective destination. For example, if a required action of the user is to stop a cooking process, the determined delivery scheme for the respective notification may indicate that the "stop" button element provided at a user interface of the apparatus is to be highlighted by way of surrounding LED lights.

As another example, if a required action of the user is to adjust a timer of a cooking process (e.g. frying) at the apparatus, the determined delivery scheme may indicate that a timer control/adjustment screen is to be automatically provided via a user interface of the apparatus, instead of requiring the user to perform default prerequisite step(s) in order to initiate the timer control/adjustment screen (e.g. touching the button in a general menu at the user interface for "timer control/adjustment"). Accordingly, instead of having to perform 2 "clicks" in order to adjust the timer, the user only has to perform 1 "click". In some embodiments, the determined delivery scheme may further indicate that feedback such as a suggested adjustment to the timer (e.g. "add 5 minutes to timer") is to be provided via the user interface of the apparatus.

By providing such shortcuts and/or promoting certain features, the technique proposed in the present disclosure can allow users to perform required actions at the apparatus in an efficient way so as to achieve the desired effects, thus saving time and reducing the amount of interactions needed between users and the apparatus, as well as eliminating the need to display and process unnecessary data/signals in order for the user to perform the required action, thus reducing the amount of computer resources required for performing certain actions at the apparatus itself.

In some embodiments, determining at least one of the delivery scheme for the notification and the access scheme for providing control access of the apparatus to the at least one user at block 104 may be based on a set of predefined rules. Table 1 and Table 2 below outline a number of exemplary predefined rules that can be used for controlling an Airfryer and/or a soup maker.

**Table 1 - Exemplary predefined rules for determining a delivery scheme for a notification associated with a required action by a user and for determining an access scheme for providing control access.**

| **Input** | | | **Output** | | |
|---|---|---|---|---|---|
| **Cooking appliance** | **User's location and/or activity** | **Required action** | **Sequence and salience level of notification at the cooking apparatus** | **Sequence and salience level of notification at external device via mobile app** | **Control access** |
| AirFryer | Standing in front of the Airfyer and looking at it | Steak needs to turn | 1-high | 1-low | AirFryer only |
| AirFryer | Proximity not sensed Location service in the phone shows he is in the garden | Steak needs to turn | 1-medium | 1-high | App and AirFryer with promoted 'Stop' control |
| AirFryer | In the kitchen cooking, 2m away from AirFryer | Adjust timer to lengthen cooking time | 1-high | Not present | AirFryer presenting screen for timer adjustment and feedback (e.g. suggested adjustment) |

**Table 2 - Exemplary predefined rules for determining a delivery scheme for a notification associated with a required action by a user and for determining an access scheme for providing control access.**

| **Input** | | | **Output** | | |
|---|---|---|---|---|---|
| **Cooking appliance** | **User's location and/or activity** | **Required action** | **Sequence and salience level of notification at the cooking apparatus** | **Sequence and salience level of notification at external device via mobile app** | **Control access** |
| AirFryer | Standing in front of the airfyer and looking at it | Steak needs to turn | 1-high | 1-low | AirFryer only |
| Soup maker | Standing in front of the airfyer and looking at it. Soup maker is next to the AirFryer | Add potatos into soup maker | 2-high | 2-low | Soup maker only |

In some embodiments, determining at least one of the delivery scheme for the notification and the access scheme for providing control access of the apparatus to the at least one user at block 104 may be based on whether at least one of the one or more users is interacting with the apparatus (e.g. physically interacting with the apparatus so that the user is paying attention to the apparatus, or interacting with the apparatus via a mobile application on one of the external devices, such as a smartphone). In these embodiments, whether at least one of the one or more users is interacting with the apparatus may be indicated by the data associated with the activity being performed by the one or more users acquired at block 102.

In some embodiments, determining the delivery scheme for the notification and the access scheme for providing control access of the apparatus to the at least one user at block 104 may be based on respective proximities of more than one user with the apparatus (or with the one or more external devices). In these embodiments, the delivery scheme may indicate respective sets of salience parameters for delivering the notification at more than one destinations.

For example, the salience parameters for delivering the notification to a first user, who is closer to the apparatus, may indicate higher salience (e.g. audio notification with a high volume) for the respective notification; the salience parameters for delivering the notification to a second user, who is not close to the apparatus (e.g. in the garden), may indicate lower salience for the respective notification (e.g. only to be provided as a text alert via a mobile application of an external device worn by the second user). Although not shown in Fig. 1, in some embodiments where the method comprises determining the delivery scheme for the notification, the method may further comprise providing the notification according to the determined delivery scheme.

In embodiments where the notification is associated with a required action from at least one of the one or more users and where the method further comprises providing the notification according to the delivery scheme determined at block 104, subsequent to providing the notification, the method may comprise determining whether the required action has been performed within an associated time period. The determination of whether the required action has been performed within the associated time period may be based on, for example, signals from image sensors (or other types of sensors) at the apparatus. For example, a camera can be provided at the apparatus (which is a cooking appliance in this example) to capture image data of the food item inside the apparatus before (or at the point of) providing the notification, and after the associated time period has expired. The image data can then be compared to determine whether the food item in the cooking appliance has been moved/turned over by the user (in the case where the required action is "turn the food item over") or whether a new ingredient has been introduced into the cooking appliance (in the case where the required action is "add ingredient"), based on whether there are any changes in the image data. Specifically, a change in orientation of the food item or a change in volume of the food item can be determined based on comparison of the image data (e.g. by analysing pixels).

If it is determined that the required action has not been performed within the associated time period, the method may further comprise changing a current operation mode of the apparatus (e.g. switching off the apparatus, stopping a cooking process performed by the apparatus, etc.), and/or determining at least one of a delivery scheme for a new notification and a new access scheme for providing control access of the apparatus to the at least one user. The context of the new notification may be associated with at least one of: a new current process being performed by the apparatus, a new current status of the apparatus, and a new required action by at least one of the one or more users at the apparatus.

For example, if it is determined that the initial required action from the user to "turn the steak over" is not performed in the associated time period, the context of the new notification may be, for example, to request the user to stop the cooking process at the apparatus. The delivery scheme for the new notification may thus be to indicate that the "stop" button (visual element) at the apparatus and/or provided via a mobile application at an external device is to be promoted.

Fig. 2 is a block diagram of an apparatus according to an embodiment. The apparatus 200 comprises a communication unit 210, an acquiring unit 220, and a determining unit 230. In some embodiments, the apparatus 200 may be a cooking appliance, such as an Airfryer, a soup maker, a coffee machine, a steam cooker, etc.

The communication unit 210 is configured to wirelessly connect to one or more external devices. The one or more external devices may be a smartphone, a tablet, a smart watch, or any other similar devices, etc.

The acquiring unit 220 is configured to acquire data associated with a current location of each of one or more users and data associated with an activity being performed by each of the one or more users.

The data associated with the current location of the one or more users may comprise at least one of: data from a satellite-based radionavigation system, signals from one or more accelerometers at the one or more external devices, signals from one or more passive infrared sensors at the apparatus and/or the one or external devices, signals from one or more audio sensors at the apparatus and/or the one or more external devices, signals from one or more ultrasound sensors at the apparatus and/or the one or more external devices, radio frequency signals, Bluetooth signals, signals associated with a wireless access point, and signals from one or more computer vision based location sensors.

The data associated with an activity being performed by the one or more users may comprise at least one of: signals from one or more image sensors, signals from one or more motion sensors, signals from an eye tracking operation based on image signals associated with the one or more users, signals from a facial recognition operation based on images signals associated with the one or more users, signals from one or more audio sensors at the apparatus and/or the one or more external devices.

The determining unit 230 is configured to determine at least one of a delivery scheme for a notification and an access scheme for providing control access of the apparatus to at least one of the one or more users, based on the data associated with the current location of each of the one or more users, the data associated with the activity being performed by each of the one or more users, and a context of the notification.

The context of the notification is associated with at least one of: a current process being performed by the apparatus, a current status of the apparatus, and a required action by at least one of the one or more users at the apparatus. For example, if the apparatus 200 is a cooking appliance, the current process being performed by the apparatus is a cooking process or a step in a cooking process. The delivery scheme indicates at least one of: one or more destinations at which the notification is provided (e.g. the apparatus itself and/or the one or more external devices), and one or more salience parameters for delivering the notification. The one or more salience parameters may comprise at least one of: a type of notification, a volume level associated with an audio notification, a font size associated with a textual notification, a vibration level associated with a haptic notification, wherein the type of notification indicates whether the notification is to provided in at least one of the following manner: audio, visual, textual, and haptic.

In some embodiments, the delivery scheme may further indicate a sequence in which the notification is provided at the plurality of destinations for the notification. In embodiments where the notification is associated with a required action from at least one of the one or more users, the delivery scheme may further indicate that an adjustment to the at least one of the one or more destinations at which the notification is provided so as to reduce a number of steps required to achieve the required action. The adjustment may comprise at least one of: providing a shortcut associated with the required action at a user interface of a respective destination, and promoting a control element associated with the required action at a user interface of a respective destination.
The access scheme indicates one or more destinations at which control for the apparatus is enabled.

In some embodiments, the determining unit 230 may be configured to determine the at least one of the delivery scheme for the notification and the access scheme for providing control access of the apparatus to the at least one user based on a set of predefined rules.

In some embodiments, the determining unit 230 may be configured to determine the at least one of the delivery scheme for the notification and the access scheme for providing control access of the apparatus to the at least one user based on respective proximities of more than one user with the apparatus 200 (or with the one or more external devices). In these embodiments, the delivery scheme may indicate respective sets of salience parameters for delivering the notification at more than one destinations.

In some embodiments, the determining unit 230 may be configured to determine the at least one of the delivery scheme for the notification and the access scheme for providing control access of the apparatus to the at least one user based on whether at least one of the one or more users is interacting with the apparatus (e.g. physically interacting with the apparatus so that the user is paying attention to the apparatus, or interacting with the apparatus via a mobile application on one of the external devices, such as a smartphone). In these embodiments, whether at least one of the one or more users is interacting with the apparatus may be indicated by the data associated with the activity being performed by the one or more users acquired by the acquiring unit 220.

In some embodiments where the determining unit 230 is configured to determine the delivery scheme for the notification, the communication unit 210 may be configured to provide the notification according to the determined delivery scheme.

In embodiments where the notification is associated with a required action from at least one of the one or more users, and the communication unit 210 is configured to provide the notification according to the determined delivery scheme, the determining unit 230 may be further configured to, subsequent to providing the notification according to the determined delivery scheme, determine whether the required action has been performed within an associated time period. Furthermore, if it is determined that the required action has not been performed within the associated time period, the apparatus 200 may be configured to change a current operation mode (e.g. switch off, or pausing/stopping a current cooking process), and/or the determining unit 220 may be configured to further determine at least one of a delivery scheme for a new notification and a new access scheme for providing control access of the apparatus to the at least one user. The context of the new notification is associated with at least one of: a new current process being performed by the apparatus, a new current status of the apparatus, and a new required action by at least one of the one or more users at the apparatus.

It will be appreciated that Fig. 2 only shows the components required to illustrate an aspect of the apparatus 200 and, in a practical implementation, the apparatus 200 may comprise alternative or additional components to those shown. For example, in some embodiments the apparatus 200 may further comprise a power source, and/or a user interface, and/or a memory.

The user interface may be for use in providing a user of the apparatus 200 with information resulting from the technique described herein. Alternatively or in addition, the user interface may be configured to receive a user input. For example, the user interface may allow a user of the apparatus 200 to manually enter instructions, data, or information. The user interface may be any user interface that enables the rendering (or output or display) of information to a user of the apparatus 200. Alternatively or in addition, the user interface may be any user interface that enables a user of the apparatus 200 to provide a user input, interact with and/or control the apparatus 200. For example, the user interface may comprise one or more switches, one or more buttons, a keypad, a keyboard, a touch screen or an application (for example, on a tablet or smartphone), a display screen, a graphical user interface (GUI) or other visual rendering component, one or more speakers, one or more microphones or any other audio component, one or more lights, a component for providing tactile feedback (e.g. a vibration function), or any other user interface, or combination of user interfaces.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A computer-implemented method for controlling an apparatus, wherein the apparatus is wirelessly connected to one or more external devices, the method comprising:
acquiring (102) data associated with a current location of each of one or more users and data associated with an activity being performed by each of the one or more users;
determining (104) at least one of a delivery scheme for a notification and an access scheme for providing control access of the apparatus to at least one of the one or more users, based on the data associated with the current location of each of the one or more users, the data associated with the activity being performed by each of the one or more users, and a context of the notification,
wherein the context of the notification is associated with at least one of: a current process being performed by the apparatus, a current status of the apparatus, and a required action by at least one of the one or more users at the apparatus,
wherein the delivery scheme indicates at least one of: one or more destinations at which the notification is provided, and one or more salience parameters for delivering the notification, and
wherein the access scheme indicates one or more destinations at which control for the apparatus is enabled.

2. The method according to claim 1, wherein the apparatus is a cooking appliance, wherein a current process being performed by the apparatus is a cooking process or a step in a cooking process.

3. The method according to claim 1 or claim 2, wherein determining (104) at least one of the delivery scheme for the notification and the access scheme for providing control access of the apparatus to the at least one user is based on a set of predefined rules.

4. The method according to any one of the preceding claims, wherein the delivery scheme further indicates a sequence in which the notification is provided at the plurality of destinations for the notification.

5. The method according to any one of the preceding claims, wherein the one or more salience parameters comprises at least one of: a type of notification, a volume level associated with an audio notification, a font size associated with a textual notification, a vibration level associated with a haptic notification, wherein the type of notification indicates whether the notification is to be provided in at least one of the following manner: audio, visual, textual, and haptic.

6. The method according to any one of the preceding claims, wherein determining (104) at least one of the delivery scheme for the notification and the access scheme for providing control access of the apparatus to the at least one user is based on whether at least one of the one or more users is interacting with the apparatus, wherein whether at least one of the one or more users is interacting with the apparatus is indicated by the data associated with the activity being performed by the one or more users.

7. The method according to any one of the preceding claims, wherein the notification is associated with a required action from at least one of the one or more users, and wherein the method further comprises, subsequent to providing the notification according to the determined delivery scheme:
determining whether the required action has been performed within an associated time period; and
if it is determined that the required action has not been performed within the associated time period, performing at least one of the following steps:
changing a current operation mode of the apparatus; and
determining at least one of a delivery scheme for a new notification and a new access scheme for providing control access of the apparatus to the at least one user, wherein a context of the new notification is associated with at least one of: a new current process being performed by the apparatus, a new current status of the apparatus, and a new required action by at least one of the one or more users at the apparatus.

8. The method according to any one of the preceding claims, wherein the notification is associated with a required action from at least one of the one or more users, and wherein the delivery scheme further indicates that an adjustment to the at least one of the one or more destinations at which the notification is provided so as to reduce a number of steps required to achieve the required action.

9. The method according to claim 8, wherein the adjustment comprises at least one of: providing a shortcut associated with the required action at a user interface of a respective destination, and promoting a control element associated with the required action at a user interface of a respective destination.

10. The method according to any one of the preceding claims, wherein determining (104) at least one of the delivery scheme for the notification and the access scheme for providing control access of the apparatus to the at least one user is based on respective proximities of more than one user with the apparatus, and wherein the delivery scheme indicates respective sets of salience parameters for delivering the notification at more than one destinations.

11. The method according to any one of the preceding claims, wherein the data associated with the current location of the one or more users comprises at least one of: data from a satellite-based radionavigation system, signals from one or more accelerometers at the one or more external devices, signals from one or more passive infrared sensors at the apparatus and/or the one or external devices, signals from one or more audio sensors at the apparatus and/or the one or more external devices, signals from one or more ultrasound sensors at the apparatus and/or the one or more external devices, radio frequency signals, Bluetooth signals, signals associated with a wireless access point, and signals from one or more computer vision based location sensors.

12. The method according to any one of the preceding claims, wherein the data associated with an activity being performed by the one or more users comprises at least one of: signals from one or more image sensors, signals from one or more motion sensors, signals from an eye tracking operation based on image signals associated with the one or more users, signals from a facial recognition operation based on images signals associated with the one or more users, signals from one or more audio sensors at the apparatus and/or the one or more external devices.

13. The method according to any one of the preceding claims, wherein the method comprises determining (104) the delivery scheme for the notification, and wherein the method further comprises providing the notification according to the determined delivery scheme.

14. A computer program comprising a computer readable medium, the computer readable medium having computer readable code embodied therein, the computer readable code being configured such that, on execution by a suitable computer or processor, the computer or processor is caused to perform the method as claimed in any one of the preceding claims 1 to 13.

15. An apparatus (200) comprising:
a communication unit (210) configured to wirelessly connect to one or more external devices;
an acquiring unit (220) configured to acquire data associated with a current location of each of one or more users and data associated with an activity being performed by each of the one or more users;
a determining unit (230) configured to determine at least one of a delivery scheme for a notification and an access scheme for providing control access of the apparatus to at least one of the one or more users, based on the data associated with the current location of each of the one or more users, the data associated with the activity being performed by each of the one or more users, and a context of the notification,
wherein the context of the notification is associated with at least one of: a current process being performed by the apparatus, a current status of the apparatus, and a required action by at least one of the one or more users at the apparatus,
wherein the delivery scheme indicates at least one of: one or more destinations at which the notification is provided, and one or more salience parameters for delivering the notification, and wherein the access scheme indicates one or more destinations at which control for the apparatus is enabled.
